# EUROPEAN PATENT APPLICATION

(11) **EP 1 120 635 A2**
(43) Date of publication of application: **01.08.2001**
(21) Application number: 00311718.1
(22) Date of filing: 27.12.2000
(51) Int. Cl.: G01F 23/04

(54) **Locator device for oil dipstick**

(30) Priority: 24.12.1999 CA 2293143; 25.02.2000 CA 2299652
(71) Applicant: McKeen, David, Kanata, Ontario K2K 2L2 (CA)
(72) Inventor: McKeen, David, Kanata, Ontario K2K 2L2 (CA); Johnson, Frank, Ottawa, Ontario K1S 2M8 (CA)
(74) Representative: Abbie, Andrew Kenneth

(57) **Abstract**

A device for locating a dipstick within a vehicle's engine. The device is mounted around the dipstick support tube within the engine and contains a light source to enable a person to find the dipstick easily, even in low light conditions. The device contains two halves which are easy to mount together around the dipstick support tube. A shim allows the device to be securely attached to the support tube. The device also has a tilt sensor to indicate when the hood of the engine is raised and only illuminates the dipstick at that time.

## Description

### Field of the Invention

The present invention relates to an illuminated device and more particularly to a device that illuminates the location of a support tube for a fluid level indicator in a motor vehicle engine.

### Background to the Invention

Low fluid levels in vehicle engines can cause serious damage to an engine. For this reason, manufacturers of vehicles recommend that fluid levels in a vehicle's engine be checked on a regular basis. To accommodate this, vehicle manufacturers install various fluid level indicator sticks to check fluid levels. These include dipsticks for checking the vehicle's oil level and the vehicle's transmission fluid level.

No standards exist regarding the location of the indicators within vehicle engines. The location of the indicators varies significantly between different makes and models of vehicles. Because of this, a person unfamiliar with a particular vehicle's engine may have difficulty in locating the indicator. Also, in low light situations even those familiar with the engine may have difficulty locating the dipstick.

Several inventions have attempted, at least partially, to make locating an indicator easier. U.S. Patent 2,743,352 to Gilbert teaches a light located adjacent to the dipstick support tube which turns on when the dipstick is removed. The limitation of Gilbert, however, is that it only makes returning the dipstick to the support tube easier, and does not aid a person in finding the locator in the first place.

Another invention which attempts to solve the above problem is U.S. Patent 3,098,254 to Rose. Rose teaches a device which fits over the indicator support tube and has a wiping device made from a phosphorescent material. The problems with Rose, however, are that the indicator has to be modified to accommodate the extra length added to the support tube by the device, that the phosphorescent material will occasionally need to be changed. creating potentially hazardous waste, and that the phosphorescent material does not always show up very well.

A third approach which attempts to solve the problem is shown in U.S. Patent No. 5,101,327 to Jewett. This device involves connecting a light source within a notched ring to the outer edge of a support tube. Jewett teaches connecting the ring to the tube by having a flange extending downwardly from the ring and using a clamp to affix this flange to the support tube.

As with the above inventions, Jewett also has a number of limitations. First, in order to accommodate the numerous diameters of indicator support tubes which presently exist in vehicle engines, Jewett is forced to provide a number of rings with different inner diameters. This is uneconomical and wasteful since the user can use only one of the rings, and the rest will likely be discarded. Jewett also is challenging to install and the flange extending downwards from the ring can provide a flimsy support. Finally, the light source in Jewett is continuously illuminated, which can drain the battery if the vehicle is used infrequently or the light source is chosen improperly.

### Summary of the Invention

The present invention overcomes the limitations of the prior art by providing a device to facilitate the location of an engine fluid level indicator with the added features that it is also easy to mount, sturdy, adaptable to various support tube diameters, and will not excessively drain the engine's battery. The device consists of a toroid or clamshell. The device can be mounted along a fluid level indicator support tube by affixing the two halves of the toroid together or by closing the clamshell around the tube. This configuration provides a sturdy yet easy to mount construction.

Further, the device is illuminated, making the dipstick easy to find. The light source on the device may be turned on only when the hood of the car is lifted by either using the hood light as the power source or by adding a switch to the hood to sense the hood opening. This will save the car battery by making sure the device is off when the hood is closed. In the alternative, and preferably, a low voltage long lasting bulb or light emitting diodes is used which remains on permanently and which is rated to last probably as long as the vehicle itself.

Further, the device is adaptable to various support tube diameters. By providing a number of shims that can be added to the inner surface of the device, the device will be able to be configured to the support tube with minimal excess material or waste.

According to the present invention then, there is provided a location indication apparatus for a support tube, said apparatus comprising a body member comprised of two halves fixedly attachable to each other for a compressive fit around said support tube; a light-transmitting lens means affixed atop each said half; a light source means disposed between each said body half and its respective lens means; and a conductor means for connecting saic light source to a power source to activate said light source and illuminate said lens means to thereby facilitate the location of said support tube.

According to a further aspect of the present invention, there is provided a kit for adding illumination around the open end of a support tube, comprising a body portion having two halves closable about said support tube adjacent said open end thereof, each half of the body portion having a light source therein and a lens illuminated by said light source to provide a ring of illumination about said open end when said light source is activated; a conductor means for connecting said light sources to a source of power; and a shim means disposable between said halves and said support tube, if necessary, to provide a tight compressive fit between said body portion and said tube.

According to yet another aspect of the present invention, there is provided a location indication apparatus for a support tube, said apparatus comprising a body member adapted fcr a concentric fit about a support tube adjacent an upper end thereof; a light transmitting lens affixed atop said body portion; at least one light source disposed in said body portion beneath said light transmitting lens; and conductor means for connecting said light source to a power source to activate said light source and illuminate said lens to thereby facilitate the location of said support tube.

According to yet a further aspect of the present invention, there is provided in a dipstick support tube affixed to an engine to slidably receive a dipstick thereinto, the support tube having one end adapted for connection to the engine and a second end to receive the dipstick thereinto, the improvement wherein said support tube adjacent said second end thereof is enlarged in diameter to supportably receive therein at least one light source, the enlarged portion having connected thereto a light transmitting lens wherein said light source, when illuminated, is visible to facilitate the location of said dipstick, said light source being connected to conductor means for connecting said light source to a source of power for selective activation of said light source.

### Brief Description of The Drawings

Preferred embodiments of the present invention will now be described in greater detail and will be better understood when read in conjunction with the following drawings in which:
Figure 1 shows a top view of one of the lens halves of an illuminated fluid level indicator locating device,
Figure 2 shows a side view of the device of Figure 1;
Figure 3 shows a top view of one side of the body of the locating device;
Figure 4 shows a side view of the device of Figure 3;
Figure 5 shows a perspective view of the body of the locating device;
Figure 6 shows a top view of the opposite side of the body of the locating device that is shown in Figures 3 and 4;
Figure 7 shows a side view of the device of Figure 6;
Figure 8 shows a top view of the locating device;
Figure 9 shows a side view of the assembled locating device, including its electrical components;
Figure 10 shows a bottom view of the locating device;
Figure 11 shows a perspective view of one half of the body of the locating device;
Figure 12 shows a side view of the shim strip;
Figure 13 shows a top view of the shim strip of Figure 11;
Figure 14 is a side elevational view of an alternative illuminated fluid level indicator locating device incorporated as part of the support tube;
Figure 15 is a side elevational cross sectional view through the locating device of Figure 14;
Figure 16 is a side elevational view of the lens of the device of Figure 14;
Figure 17 is a top plan view of the locating device with the lens removed;
Figure 18 is a plan view of the locating device with the indicator in place;
Figure 19 is a side elevational view of a further alternative fluid level indicator locating device;
Figure 20 is a side elevational cross sectional view through the locating device of Figure 19;
Figure 21 is a perspective view of the body of a further alternative embodiment of the locating device;
Figure 22 is a perspective view of the embodiment of Figure 21 with the lenses removed;
Figure 23 is a perspective view of the locator in an open position with the lenses in place;
Figure 24 is a perspective view of the lenses themselves;
Figure 25 is a cross-sectional view of the locator including the light sources;
Figure 26 is a top plan view of the body of the locator in a closed position;
Figure 27 is a perspective view of shims for use with the embodiment of Figure 21; and
Figure 28 is a circuit diagram for standard surge protection of the present device.

### Detailed Description of the Invention

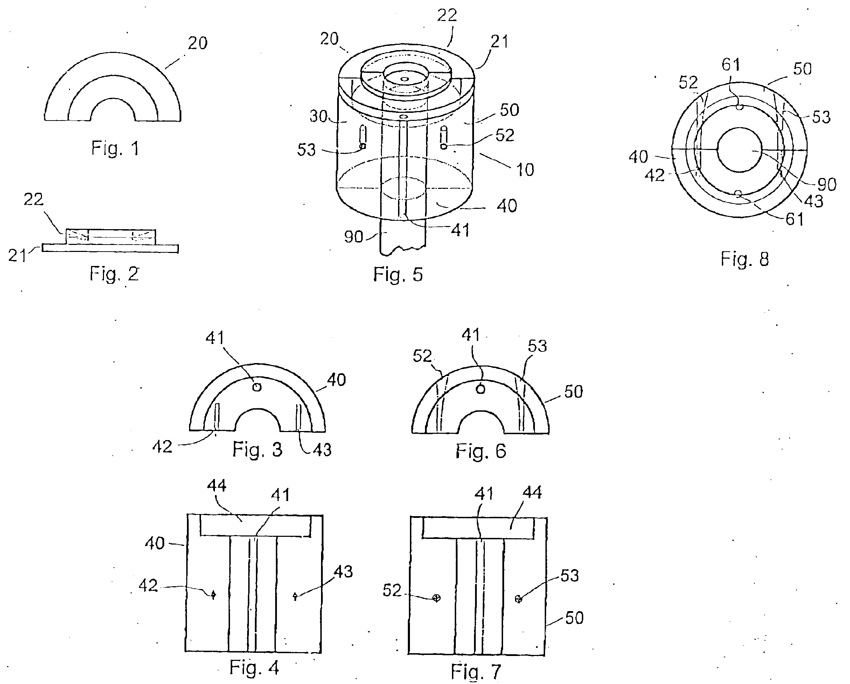

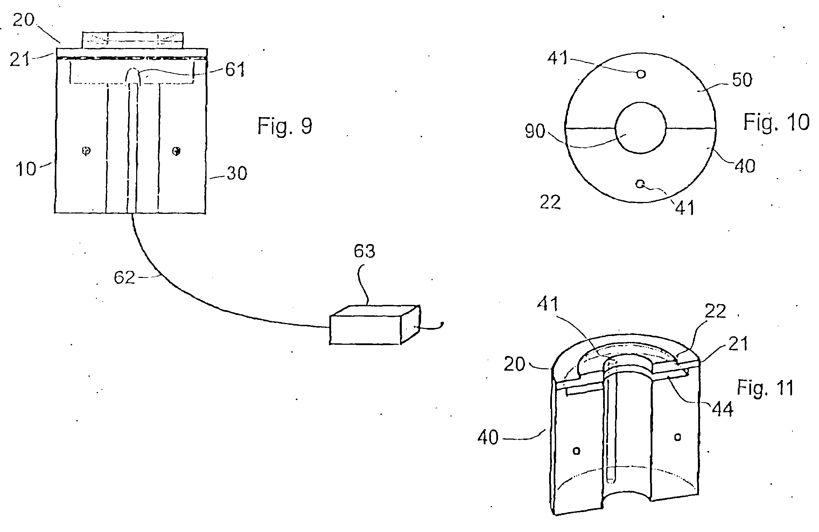

Referring to the drawings, one embodiment of the present invention is most clearly illustrated by Figures 5 and 9. A fluid level indicator stick locator 10 is created for mounting around a support tube 90 for the indicator, and is comprised of a pair of semicircular lens 20 respectively affixed on top of a split body portion 30 and a light source 61 in each half of the body portion.

Lens 20 is better seen from Figures 1 and 2. Lens 20 comprises a half ring shape with wider base 21 and a narrower top 22. The inner radius of lens 20 is sufficiently large to accommodate most support tubes currently installed in vehicles. The outer radius of base 21 corresponds with that of body portion 30 and is sufficiently greater than the inner radius to allow a light source to be installed under lens 20, yet sufficiently small to allow the locator 10 to be positioned in the tight spaces found around most support tubes. Lens 20 is preferably moulded from one piece of polymeric resin material and is either transparent or translucent.

Body portion 30 is comprised of body half 40 and body half 50, as can most clearly be seen in Figures 5 and 8.

Body half 40 is best seen in Figures 3 and 4. Body half 40 is shaped like a half toroid, with the inner radius of body half 40 being the same or almost the same as the inner radius of lens 20. The outer radius of body half 40 is close to or the same as the outer radius of lens 20. Body half 40 includes a light mount 44 which, in the preferred embodiment, is simply an annular recess formed into the top of body half 40 sufficiently deep and large enough to accommodate light source 61, and alternatively having a groove for preventing unwanted displacement of said light source 61. Body half 40 also contains a hole 41 which extends from light mount 44 to the bottom of body half 40. The top of hole 41 can be enlarged if necessary to provide a "socket" for light source 61 and the remainder of the hole provides a conduit for wires 62 (Figure 9) that connect the light source to a power supply. Body half 40 additionally includes screw hole ends 42 and 43 extending partial'y therethrough to receive screws (not shown) used to connect body halves 40 and 50 together around tube 90.

Body half 50 is best seen in Figures 6 and 7. Body half 50 is the mirror image of body half 40 and is essentially identical thereto with the exception of screw holes 52 and 53 which extend all the way through the half and which are aligned with screw hole ends 42 and 43 in body half 40.

In the alternative to two separate body halves, the body portion can be fabricated so that the two halves are connected together along one edge thereof such as by means of a web or bridge of the same material used to mold the halves themselves. The body portion can then be clamshelled around the tube and clamped into place by means of a screw in the manner described above, or by a catch molded or connected to the body halves or by any other suitable means as will be apparent to those skilled in the art.

Each lens 20 is connected, typically permanently, to the respective body half such as by means of adhesive, effectively sealing light source 61 within light mount 44. A small amount of adhesive injected into hole 41 around wires 62 or between the light source and the top of hole 41 can be used to hold the light source in place. In an alternative embodiment, wires 62 and light source 61 can be moulded in place during the creation of body half 40. In a preferred embodiment, light source 61 is a long lasting switchable light. A light emitting diode capable of 10,000 hours of service is well suited for this purpose.

As is best seen in Figures 8 and 10, body portion 30 is easily assembled by placing body half 40 in contact with body half 50 around support tube 90 and affixing the body halves together by passing a screw through screw hole 52 into screw hole end 42, and passing a screw through screw hole 53 into screw hole end 43. A shim may be added to the inner radius of body half 40 and body half 50 to ensure tight contact with support tube 90.

As will be appreciated by one skilled in the art, body halves 40 and 50 can be made from a wide variety of materials. However, several constraints exist. The material chosen must be heat resistant, oil resistant, and durable. In the preferred embodiment, the body halves are composed of hard rubber or plastic.

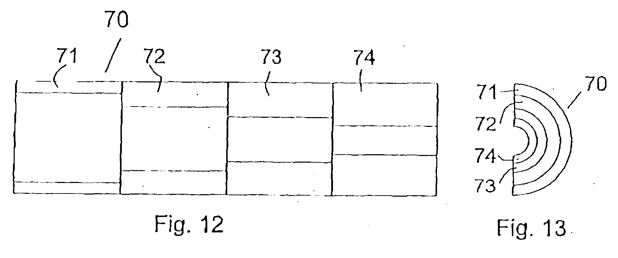

In order to ensure a tight fit of body portion 30 to support tube 90, the present locating device 10 can be accompanied by shim strips 70, such as shown in Figures 12 and 13. Each strip 70 includes a number of shims, as illustrated by shim 71, shim 72, shim 73, and shim 74. Shims 71, 72, 73 and 74 all have an outer diameter the same as body 30's inner diameter. The inner diameter of each shim 71 to 74 varies in order to accommodate various diameters of support tube 90. In a preferred embodiment, shims 71, 72, 73 and 74 are made from the same material as the lens 20, allowing the light source to illuminate the area adjacent to the support tube. In an alternative embodiment, the shims can be made from any oil and heat resistant rubber or plastic.

The shims are provided in halves like the body halves to facilitate installation around the support tube. A user simply selects the proper shim based on the diameter of support tube 90 within the vehicle, breaks or cuts the shims from shim strips, and applies the shims to the inner surfaces of body sides 40 and 50 prior to installation. A small tube of adhesive material can be provided with the shims to allow the user to glue the shims to a body half prior to installation around support tube 90, making the installation easier.

Light source 61 is powered through wires 62. Wires 62 comprise an insulated harness attached between light source 61 and a power source. The power source can either be the car battery, in which case switch 63 can be added between the battery and light source 61, or to the hood light if the vehicle is equipped with one. Switch 63, if present, can be a tilt sensing switch mounted to the hood of the car to activate the present device only when the hood is opened. In the preferred alternative, switch 63 can be plunger-actuated and mounted at any convenient location where the hood meets the vehicle's body. One skilled in the art will appreciate that there are a number of other alternative switches for sensing when the hood is opened.

Lens 20 can be coloured to identify different dipsticks. For example, amber lenses can be used for the oil, red lenses can be used for the transmission fluid.

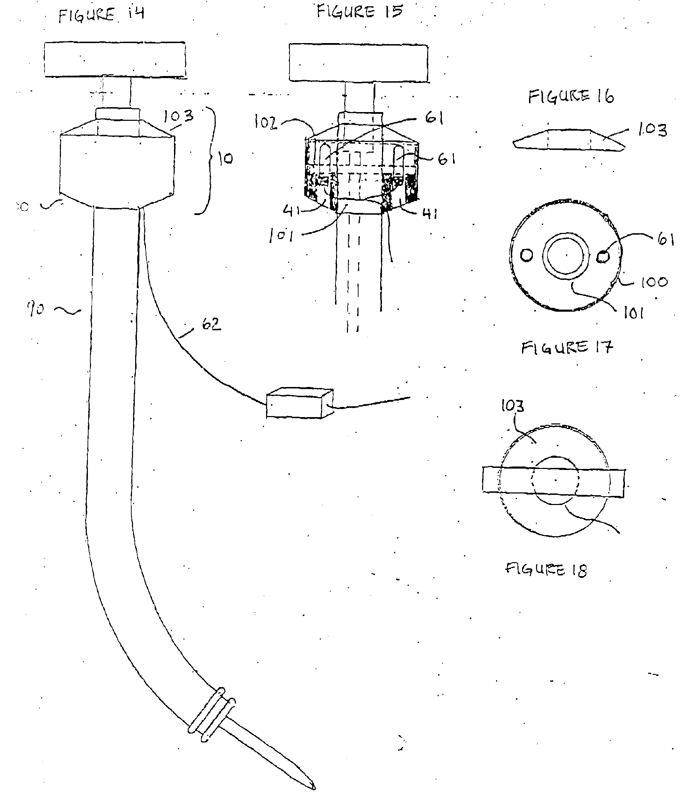

Original equipment manufacturers may prefer that the dipstick locator be affixed to or integrated into support tube 90 at the time of engine assembly. To accommodate this preference, and in the alternative to post assembly of the two body halves 40 and 50 around an existing support tube, the body portion can be fabricated as a unitary piece of material preassembled onto support tube 90 as shown in Figure 14 wherein like numerals have been used to identify like elements.

As shown in Figure 14, the body portion 100 of the locator is generally toroidal in configuration and has a central aperture 101 formed axially therethrough for a tight friction fit about support tube 90. If a more positive connection between body 100 and the support tube is required, some adhesive can be applied between the two, or the tube and the body portion can be formed with detentes for a snap fit. Other means of connection will occur to those skilled in the art.

Body portion 100 includes at its upper end a hollowed out annular recess 102 which is sufficient in size and depth to accommodate light source 61. Body portion 100 is formed with holes 41 corresponding in number to the number of light sources 61. Holes 41 extend from annular recess 102 through the body portion and can be enlarged if necessary at their upper ends to provide a "socket" for the light sources. The remainder of the holes provide a conduit for wires 62 forming a harness that connect the light sources to a power supply. In the alternative, wires 62 and light sources 61 can be molded in place during the creation of the body portion with the wires 62 simply emerging from the molded body portion.

The upper surface of body portion 100 including recess 102 is preferably sealed by a light transmitting lens 103 as shown in Figures 15 and 16. The lens is formed with a central aperture sized to fit tightly around tube 90 and its outer diameter is the same as the outer diameter of body portion 100. The lens is connected typically permanently to body portion 100 such as by means of an adhesive, effectively sealing the light sources 61 within the locator. The diameter of body portion 100 is selected to fit within the limited space typically found around the dipstick support tube.

The locator as described above can be slipped onto support tube 90 for pre-assembly therewith prior to assembly of the support tube to the engine.

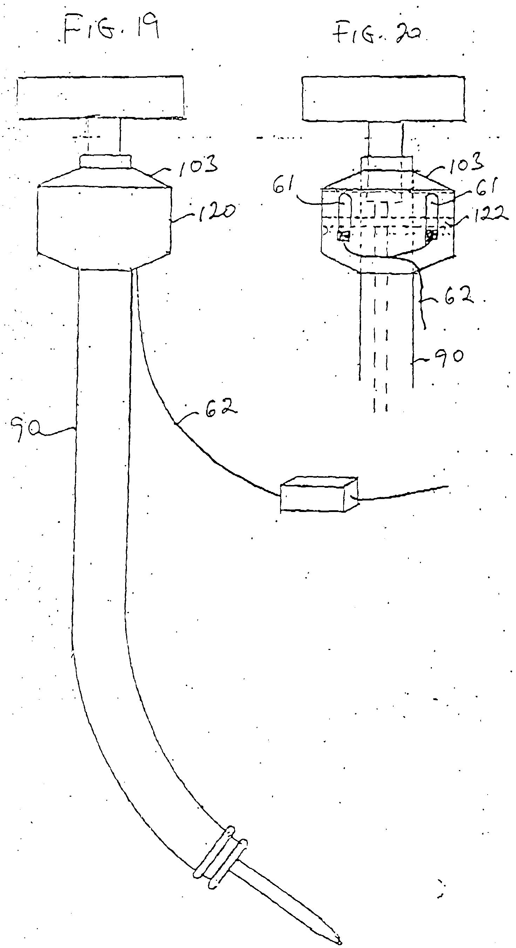

In the alternative to the use of a discrete body portion 100, a similar result can be obtained by enlarging the support tube's upper end as shown in Figure 19. More specifically. the upper end of tube 90 is enlarged or can be made to include an enlargement that forms a hollow body portion 120. Inside the housing, a ring-shaped plate 122 is installed to provide a support for light sources 61. The plate has an aperture formed through its center to allow the dipstick to pass. The top of housing 120 is then fitted with and sealed by lens 103. In other respects, this embodiment is the same as the embodiment of Figures 14 to 18.

A further embodiment of the invention is shown in Figures 21 to 28 in which like reference numerals have been used to identify like elements.

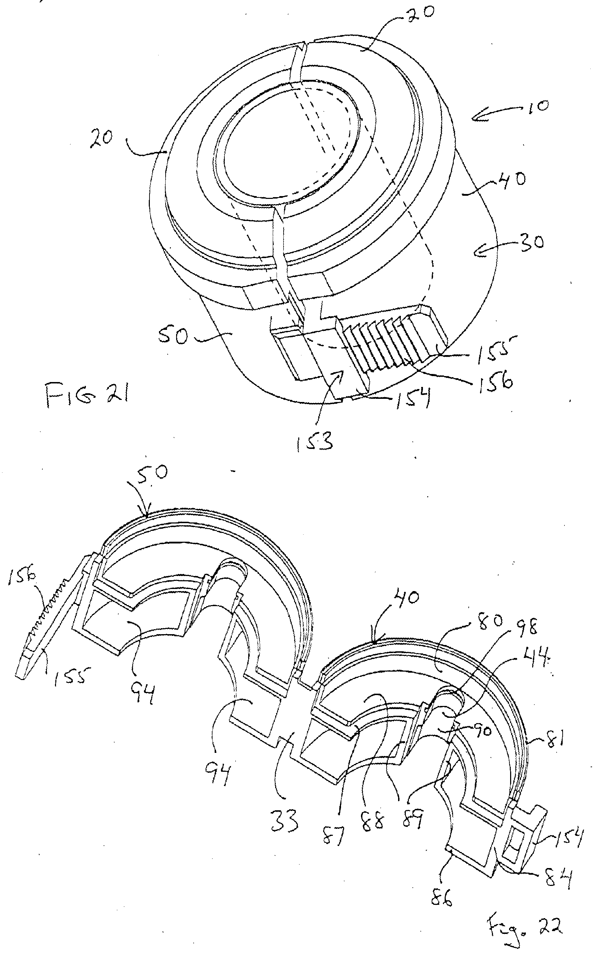

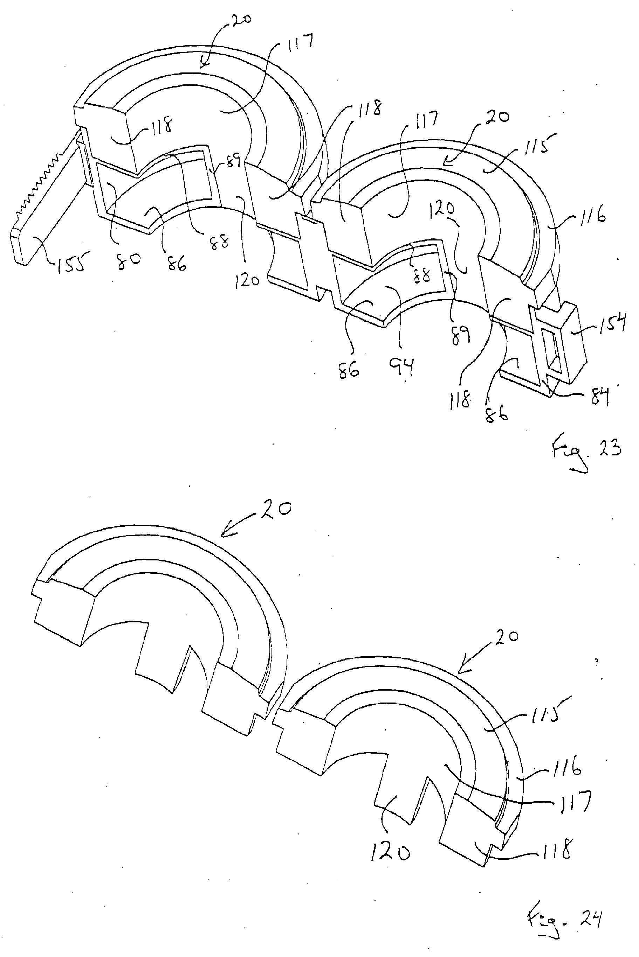

In this embodiment, locator device 10 once again includes a body 30 consisting of two halves 40 and 50 hingedly connected together as shown most clearly in Figures 22 and 26. The hinge 33 connecting the two halves is ideally injection molded from the same material used to mold the halves for ease of manufacturing, and, as seen most clearly from Figure 26, the web of material forming the hinge can be thinned and shaped for improved flexibility and to facilitate repeated opening and closing of the clamshell. Each halve of the body portion includes a lens 20 that snap or friction fits to the respective body half as will be described below. Each body half is also provided with one or more light sources 61 (Figure 25) such as a bulb or LED, including appropriate wiring harness 62 for connecting the LED's to a power supply. Finally, the device includes a suitable closure mechanism which in the embodiment shown in an integrally formed adjustable buckle 153 consisting of a clasp 154 on one of the body halves, and a tab 155 on the other half. The tab includes a plurality of asymmetrical teeth 156 that permit some adjustment to the degree of closure of the two halves.

Referring to Figure 22, two body halves are essentially mirror images of one another. As aforesaid, the body halves are preferably injection molded from a suitable temperature and oil resistant plastics material. Each half includes an outer peripheral wall 80 terminating along its upper edge with a reduced thickness rim 81. This rim is intended to friction or snap fit into a correspondingly shaped groove in lens 20 to hold the two components together as will be described in greater detail below. Each end of rim 81 stops just shy of end 84 of wall 80 to provide clearance for the end of the lens half when installed. Each body half also includes a lower annular wall 86, an intermediate annular wall 88 and a vertical channel 44 extending between the two end defined by side walls 89 and a rounded inner wall 90. Intermediate wall 88 includes a peripherally extending notch 87 along its inner edge, the notch extending up the contiguous inner edge of wall 80. Hollow cavities 94 are defined by the lower, intermediate and side walls of the body portion and the side walls of channel 44. A horizontal notch or groove 98 is formed into rounded inner wall 90 of channel 44. Light emitting diodes of the sort used in the present device are manufactured with a lip 150 seen most clearly in Figure 25 that will fit into groove 98 to position the LED and prevent it from moving up or down.

Figure 23 shows lenses 20 when installed onto each of the body halves. The lenses themselves are shown in Figure 24. Each lens generally comprises an upper surface 115, a circumferential shoulder 116, an inner wall 117 and end walls 118. Each lens also includes a downwardly depending leg 120. As seen best from Figure 23, when the lenses are installed, they flush fit and sealingly abut against the contiguous surfaces of the body halves. Specifically, the lower edges of walls 117 and 118 seal into notch 98, the vertical edges of leg 120 fit closely between side walls 89 and the inner surface of shoulder 116 fits closely against the outer surface of outer wall 80. Referring to Figure 25, the lenses each include an inner flange 122 that defines a peripheral groove 123 inside the shoulder 116. This groove snaps onto or frictionally fits onto rim 81 to hold the lens to the body half. Thus, the lenses completely enclose and seal the area around each light source 61. The inner surfaces 114 of each upper surface 115 of the lenses is etched or frosted for better diffusion of the light from LED 61.

Once the lenses 20 are in place, respectively on both body halves 40 and 50, the halves 40 and 50 are closed around support tube 90 using buckle 153. Shims 70 as shown in Figure 27 can be connected to the body halves 40 and 50 to ensure ethat the locator device 10 fits snugly around support tube 90. The shims will typically be made of, without being restrictive, rubberized materials for a friction fit around support tube 90. The rear surfaces of the shims can be shaped or formed to press fit into one or more of cavities 94 to fold them in place as the locator is installed around the support tube.

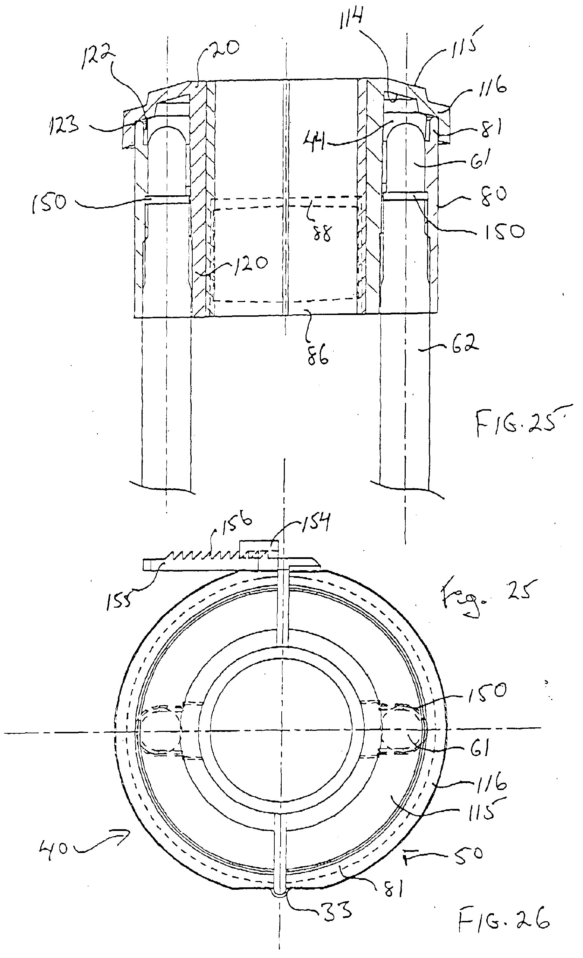

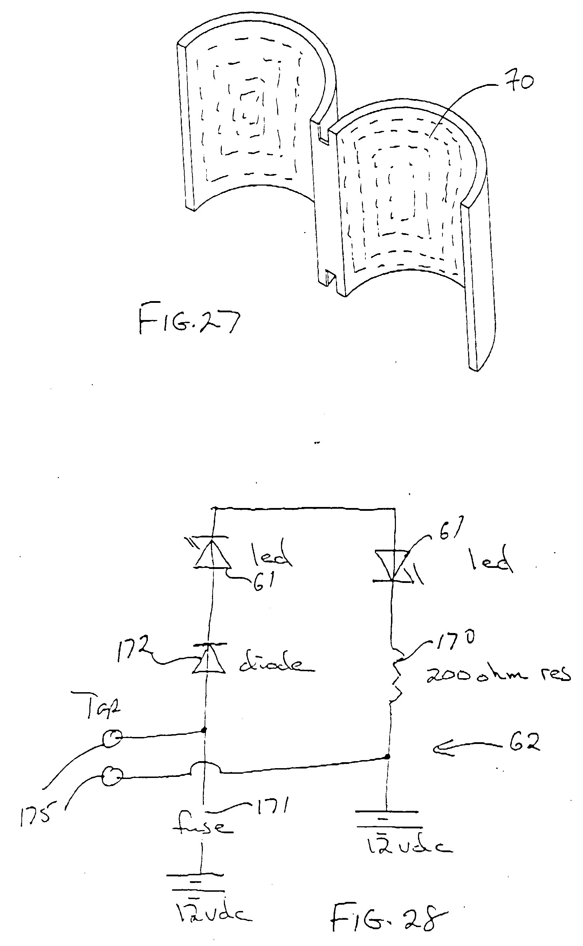

If preferred, and with reference to Figure 28, the wiring harness 62 can include a resistor 170 to drop the voltage from the vehicle battery from 12 VDC to 1.5 VDC, a resettable fuse 171 to protect the LEDs from voltage surges, and a diode 172 to protect against inadvertent polarity reversals. The wiring harness can also include a tap 175 for connection of a second locator device, for example, for the transmission fluid level indicator. The LEDs can be switched, but to simplify installation and to reduce costs, long lasting LEDs (100,000 - 200,000 hours) are available which can remain on permanently without serious drain on the battery and which will last for the expected life of the vehicle. As shown, the two LEDs 61 on each locator can be wired in series so that only two wires from the locator to the battery are required. The circuit components can be incorporated onto a small printed circuit board incorporated into the harness and sealed against dirt and fluids, or the components can be incorporated directly into the electrical leads close to the locator itself, or close to the battery or at any point in between. As well, the space around the wiring harness between channel 44 and leg 120 of lens 20 can be injected with a glue or some other void-filling substance to provide a seal and to more permanently connect each lens to its respective body half.

It will be seen that the present invention provides a substantial improvement over other apparatus used for locating fluid level indicators by providing a device which is easier to install, sturdier, less wasteful, and easy on the vehicle battery.

Various modifications and changes may be made with respect to the foregoing description without departing from the spirit of such invention.

## Claims

1. A location indication apparatus for a support tube, said apparatus comprising:
a body member comprised of two halves fixedly attachable to each other for a compressive fit around said support tube;
a light-transmitting lens means affixed atop each said half;
a light source means disposed between each said body half and its respective lens means; and
a conductor means for connecting said light source to a power source to activate the said light source and illuminate said lens means to thereby facilitate the location of said support tube.

2. The apparatus of claim 1 further comprising switch means disposed between said light source and said source of power to control the actuation of said light source.

3. The apparatus of claim 2 further including shim means disposable between said body portion and said tube to ensure a tight compressive fit between said body portion and said tube.

4. The apparatus of claim 3 wherein said body portions are attached to each other by means of threaded fasteners.

5. The apparatus of claim 4 wherein said lens means conform in shape to the upper surface of each said half and is sealingly connected thereto to enclose said light source between said body half and said lens means.

6. The apparatus of claim 3 wherein said halves of said body portion are pivotably connected together along a respective edge thereof for a clamshell fit of said body portion about said support tube.

7. The apparatus of claims 5 or 6 wherein said two halves are each toroidal in shape to form a cylindrical body portion around said support tube.

8. The apparatus of claim 7 wherein said lens means encircles said support tube when said halves are connected together to provide a circle of illumination about said support tube.

9. The apparatus of claim 8 wherein said shim means are light transmitting.

10. A kit for adding illumination around the open end of a support tube, comprising:
a body portion having two halves clampable about said support tube adjacent said open end thereof, each half of the body portion having a light source therein and a lens illuminated by said light source to provide a ring of illumination about said open end when said light source is activated;
a conductor means for connecting said light sources to a source of power; and
a shim means disposable between said halves and said support tube, if necessary, to provide a tight compressive fit between said body portion and said tube.

11. A location indication apparatus for a support tube, said apparatus comprising:
a body member adapted for a concentric fit about a support tube adjacent an upper end thereof;
a light transmitting lens affixed atop said body portion;
at least one light source disposed in said body portion beneath said light transmitting lens; and
conductor means for connecting said light source to a power source to activate said light source and illuminate said lens to thereby facilitate the location of said support tube.

12. The apparatus of claim 11 wherein said body portion is adapted for a friction fit about said support tube.

13. The apparatus of claim 11 wherein said lens is sealingly connected to said body portion.

14. In a dipstick support tube affixed to an engine to slidably receive a dipstick thereinto, the support tube having one end adapted for connection to the engine and a second end to receive the dipstick thereinto, the improvement wherein said support tube adjacent said second end thereof is enlarged in diameter to supportably receive therein at least one light source, the enlarged portion having connected thereto a light transmitting lens wherein said light source, when illuminated, is visible to facilitate the location of said dipstick, said light source being connected to conductor means for connecting said light source to a source of power for selective activation of said light source.
